# FASCICULE DE BREVET EUROPEEN

(11) **EP 1 457 575 B1**
(45) Date de publication et mention de la délivrance du brevet: **26.03.2008**
(21) Numéro de dépôt: 04447017.7
(22) Date de dépôt: 26.01.2004
(51) Int. Cl.: C21C 5/52

(54) **DISPOSITIF D'OBSERVATION DE LA CHARGE D'UN FOUR ELECTRIQUE D'ACIERIE**
Vorrichtung zum Beobachten von Chargiergut in einem Elektrostahlofen
Device for observing the charge in an electric steel production furnace

(30) Priorité: 14.03.2003 BE 200300161
(43) Date de publication de la demande: 15.09.2004
(73) Titulaire: Centre de Recherches Metallurgiques - Centrum voor de Research in de Metallurgie, 1200 Bruxelles (BE)
(72) Inventeur: Nyssen, Pierre, 4031 Angleur (BE); Mathy, Cécile, 4347 Voroux-Goreux (BE); Schyns, Marc, 4690 Roclenge-sur-Geer (BE)
(74) Mandataire: pronovem

(56) Documents cités:
- FR-A- 1 348 755
- GB-A- 2 150 269
- US-A- 4 971 550

## Description

### Objet de l'invention

La présente invention se rapporte à un dispositif d'observation de la charge d'un four électrique d'aciérie, en particulier d'un four à arc, pour surveiller la fusion des mitrailles dans ledit four.

### Etat de la technique

Actuellement la charge des fours à arc d'aciérie est constituée principalement, et parfois même complètement par des mitrailles. Ces mitrailles présentent cependant un volume apparent nettement supérieur au volume qu'elles occupent à l'état fondu. Elles ne peuvent donc pas être chargées en une seule fois, et le chargement est dès lors fractionné en plusieurs paniers successifs. Un panier ne peut être enfourné que lorsqu'une partie des mitrailles du panier précédent sont fondues et que l'espace disponible dans le four est suffisant pour recevoir le panier suivant.

Le rendement de l'opération de fusion, notamment au point de vue énergétique et donc économique, dépend notamment du moment de chargement des paniers de mitrailles.

Si ce chargement se fait de façon trop précoce, l'espace libre peut ne pas être suffisant et l'opérateur est obligé de tasser les mitrailles dans le four au moyen du panier vide. Au contraire, si le chargement est tardif, le four reste pendant un certain temps, par ailleurs difficile à déterminer, mal utilisé parce que la quantité de mitrailles restant à fondre est trop faible. L'énergie consommée pendant ce temps est absorbée essentiellement par les parois du four et est évacuée sans utilité par les circuits de refroidissement. Le rendement énergétique et la productivité du four en sont affectés.

Dans la pratique actuelle, le moment de chargement d'un panier de mitrailles est déterminé suivant un mode opératoire fixé à l'avance et identique pour chaque charge du four. On se trouve dès lors fréquemment dans une situation de chargement soit précoce soit tardif, avec les inconvénients rappelés plus haut.

Il existe également des fours qui sont équipés d'une trémie de chargement, le four étant alors capable de contenir une charge complète de mitrailles; cette charge peut être enfournée en une seule fois dans le four. Dans ce cas, le transfert des mitrailles de la trémie vers la cuve ne se produit pas toujours de manière régulière, pouvant affecter ainsi la durée de la fusion.

On sait par ailleurs qu'un four à arc comporte plusieurs brûleurs, généralement disposés dans la paroi latérale du four. En cours de fusion d'une charge, les brûleurs fonctionnent suivant un mode opératoire défini à l'avance. En pratique industrielle, il arrive cependant qu'un chargement non uniforme de mitrailles soit à l'origine d'un manque de mitrailles dans une zone particulière du four, ce qui entraîne un fonctionnement inefficace d'un ou de plusieurs brûleurs situé(s) dans cette zone.

Un autre phénomène fréquent concerne la formation de "loups" sur les parois du four. Il s'agit d'amas de mitrailles infondues et de laitier, qui restent accrochés aux parois du four. Ces loups peuvent se détacher en fin de processus et causer dans le four de violentes réactions qui peuvent compromettre la sécurité des opérateurs, notamment lors de la mesure de la température du bain en fusion. Cette mesure de la température se fait en effet par une ouverture appropriée pratiquée dans la paroi du four, généralement en face de l'orifice de coulée du laitier.

De plus, la présence de gros blocs métalliques plus difficile à fondre peut provoquer une fusion irrégulière de la charge. L'opérateur ne dispose actuellement d'aucun moyen simple et fiable lui permettant de détecter les infondus éventuels dans le four.

### Buts de l'invention

La présente invention vise à fournir un dispositif permettant de visualiser l'intérieur d'un four de fusion, et ainsi de surveiller la fusion d'une charge de mitrailles dans un four électrique. Ce dispositif doit permettre de remédier aux inconvénients précités en adaptant la conduite du four en fonction de l'évolution de la fusion de la charge.

### Résumé de l'invention

Conformément à l'invention, un dispositif d'observation de la charge d'un four électrique, en particulier d'un four à arc d'aciérie, ledit four électrique comportant un ou plusieurs brûleurs disposés au-dessus du niveau du bain en fusion, est caractérisé en ce qu'au moins un desdits brûleurs est équipé d'une caméra et en ce que ladite caméra est disposée à l'intérieur dudit brûleur.

Selon une variante avantageuse de l'invention, ladite caméra peut être une caméra infrarouge endoscopique.

Avantageusement, la caméra est disposée de telle manière que son axe de visée coïncide avec l'axe longitudinal du brûleur.

La disposition de la caméra à l'intérieur du brûleur permet d'éviter l'obstruction de la fenêtre de visée de la caméra par des projections de laitier liquide. En effet, ces projections inévitables à l'intérieur du four sont repoussées par le flux gazeux sortant du brûleur. En outre, la température régnant au nez du brûleur empêche toute solidification de matières sur celui-ci.

Selon une forme de réalisation préférée, ladite caméra peut être une caméra de visée infrarouge de longueur d'onde déterminée, par exemple de l'ordre de 3,9 µm. Une telle caméra permet d'observer l'intérieur du four sans que l'observation soit perturbée par la flamme du brûleur ou par des particules de poussières présentes dans l'atmosphère du four. En particulier, la longueur d'onde de 3,9 µm correspond à une fenêtre bien précise du CO et du CO₂, pour laquelle ces deux gaz n'absorbent pas le rayonnement infrarouge ; il est ainsi possible d'observer la charge du four à travers la flamme du brûleur sans que la vision soit perturbée par cette flamme. En outre, la taille moyenne des particules de poussière étant inférieure à cette longueur d'onde, leur présence ne gène pas la qualité de la vision de la caméra.

La caméra, et en particulier sa tête endoscopique éventuelle, peut avantageusement être équipée de moyens de refroidissement, notamment par circulation d'eau.

De même, il peut être prévu des moyens de balayage de la fenêtre de visée par un gaz neutre, tel que l'argon ou l'azote. On peut également utiliser à cet effet un hydrocarbure gazeux, tel que le méthane, le butane ou le propane par exemple, suivant le type de brûleur. L'utilisation de méthane s'avère particulièrement intéressante à cet égard, parce que ce gaz exerce un effet de refroidissement sur la fenêtre de visée, du fait qu'il réagit plus loin dans la flamme en présence d'oxygène et qu'il ne perturbe pas la flamme du brûleur.

De tels moyens de refroidissement et/ou de balayage permettent d'assurer une bonne tenue de la caméra dans des conditions industrielles.

Enfin, la fenêtre de visée de l'endoscope de la caméra est de préférence réalisée en un matériau résistant aux températures élevées régnant à l'intérieur du four. A cet égard et à titre d'exemple uniquement, on peut notamment utiliser un saphir.

Avantageusement, cette fenêtre de visée peut être amovible, ce qui permet son remplacement aisé en cas de nécessité au cours d'une campagne de fonctionnement du four.

### Brève description des figures

Un exemple de réalisation de l'invention sera décrit plus en détail ci-dessous, en faisant référence aux dessins annexés.

La figure 1 représente schématiquement en coupe verticale un four à arc d'aciérie, comportant le dispositif de l'invention.

La figure 2 montre, en coupe longitudinale schématique, un brûleur du four à arc de la figure 1, équipé d'une caméra d'observation.

Ces figures constituent des représentations schématiques, dans lesquelles on n'a pas reproduit les éléments qui ne sont pas directement nécessaires pour la compréhension de l'invention. Des pièces identiques sont désignées par les mêmes repères numériques dans les figures.

### Description d'une forme d'exécution préférée de l'invention

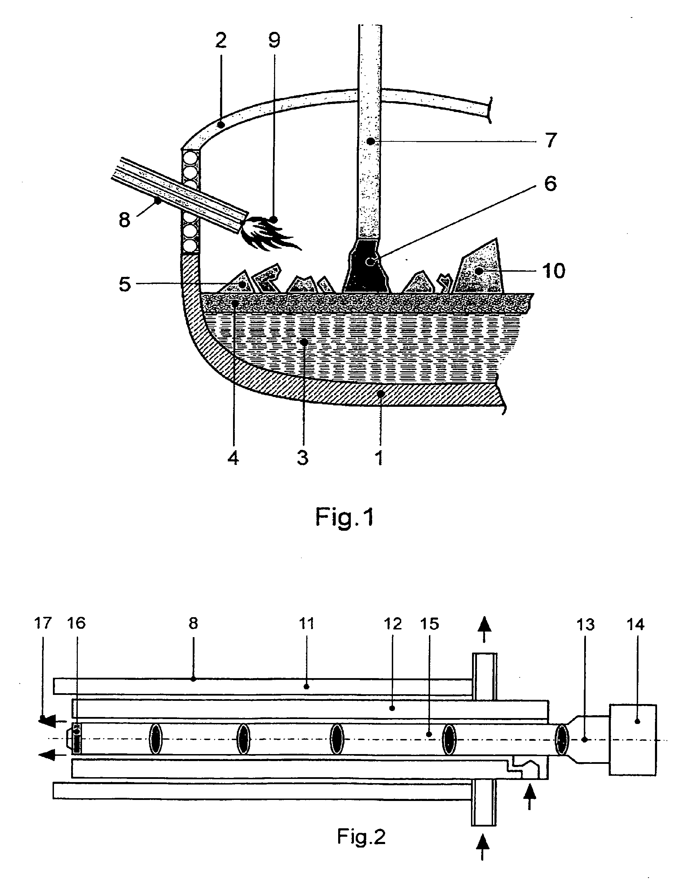

La figure 1 montre une vue fragmentaire d'un four à arc d'aciérie, en coupe verticale, illustrant schématiquement la position d'un brûleur pouvant accueillir un dispositif de l'invention.

Le four à arc comprend en particulier une cuve 1, fermée par un couvercle 2. En fonctionnement, la cuve contient un bain d'acier fondu 3, recouvert d'une couche de laitier 4. Après l'affinage, l'acier en fusion 3 est versé par un trou de coulée approprié, bien connu dans la technique et non représenté ici. Après la coulée, une nouvelle quantité de mitrailles est ensuite chargée dans le four, au moyen d'un panier également non représenté. A cet effet, le couvercle 2 doit être ouvert. Cette charge de mitrailles est représentée en 5. Elle est à son tour fondue au moyen d'un arc électrique 6, formé entre une électrode 7 et le bain d'acier fondu 3, avec l'appoint de brûleurs tels que 8, également bien connus dans la technique, et développant des flammes telles que 9. La fusion de la charge n'est pas toujours homogène, car de plus gros blocs tels que 10 peuvent n'être pas complètement fondus en même temps que le reste de la charge. Il peut arriver que ces blocs se placent devant le trou de coulée, ou à proximité de celui-ci, et perturbent ainsi le déroulement normal de la coulée.

Selon la pratique actuelle, il n'est pas possible de déceler la présence de ces blocs infondus, de même que l'existence de loups, par ailleurs bien connus, attachés aux parois du four.

On a représenté schématiquement dans la figure 2 un brûleur conventionnel 8, comportant un tube extérieur 11 et un tube intérieur 12 de même axe 13. Comme le montre la figure, ce brûleur est équipé ici, suivant l'invention, d'un système de visualisation comprenant une caméra 14, qui est de préférence une caméra infrarouge, et un endoscope 15. Il va de soi que plusieurs brûleurs peuvent être équipés de cette façon.

L'endoscope 15 est disposé dans le tube intérieur 12, suivant l'axe longitudinal 13 du brûleur 8, et sa fenêtre de visée 16 est située au centre de la face frontale du brûleur, à fleur ou légèrement en retrait par rapport à celle-ci. Le tube intérieur 12 est parcouru par un fluide gazeux, symbolisé par des flèches 17, qui protège la tête de visée 16 contre les diverses projections liquides provenant du bain fondu.

La caméra proprement dite 14 et l'endoscope 15 peuvent comporter des moyens de refroidissement, respectivement de circulation d'eau. De tels moyens sont bien connus dans la technique et ne sont pas représentés ici.

Le dispositif de l'invention permet d'observer la charge du four, d'y déceler les anomalies de fonctionnement et par conséquent d'améliorer la conduite du four électrique. Grâce à ce dispositif d'observation, l'opérateur peut déterminer le moment optimal pour charger un panier de mitraille lorsque le four offre un espace suffisant. Il en résulte un gain de productivité du four et un contrôle plus efficace de la consommation d'énergie. Le fonctionnement des brûleurs peut être contrôlé d'une manière plus objective, en fonction de la situation réelle dans le four. Enfin, les loups ou les infondus peuvent être détectés plus régulièrement à l'intérieur du four, permettant le maintien de la puissance électrique jusqu'à la fusion complète, ce qui évite les phases d'arrêt inutiles mais jusqu'à présent inévitables.

## Revendications

1. Dispositif d'observation de la charge d'un four électrique, en particulier d'un four à arc d'aciérie, ledit four électrique comportant un ou plusieurs brûleurs disposés au-dessus du niveau du bain en fusion, **caractérisé en ce qu**'au moins un desdits brûleurs (8) est équipé d'une caméra (14) et en ce que ladite caméra est disposée à l'intérieur dudit brûleur.

2. Dispositif d'observation suivant la revendication 1, **caractérisé en ce que** ladite caméra est une caméra infrarouge endoscopique.

3. Dispositif d'observation suivant l'une ou l'autre des revendications 1 et 2, **caractérisé en ce que** l'axe de visée (13) de ladite caméra coïncide avec l'axe longitudinal du brûleur.

4. Dispositif d'observation suivant l'une quelconque des revendications 1 à 3, **caractérisé en ce que** ladite caméra est une caméra de visée infrarouge de longueur d'onde déterminée.

5. Dispositif d'observation suivant la revendication 4, **caractérisé en ce que** la longueur d'onde de ladite caméra de visée infrarouge est d'environ 3,9 µm.

6. Dispositif d'observation suivant l'une quelconque des revendications 1 à 5, **caractérisé en ce que** la caméra, et en particulier sa tête endoscopique éventuelle, est équipée de moyens de refroidissement.

7. Dispositif d'observation suivant l'une quelconque des revendications 1 à 6, **caractérisé en ce qu**'il est prévu des moyens de balayage de la fenêtre de visée (16) par un gaz protecteur.

8. Dispositif d'observation suivant la revendication 7, **caractérisé en ce que** ledit gaz protecteur est choisi parmi le groupe comprenant des gaz neutres tels que l'argon ou l'azote, et des hydrocarbures gazeux, tels que le méthane, le butane et le propane.

9. Dispositif d'observation suivant l'une quelconque des revendications 1 à 8, **caractérisé en ce que** la fenêtre de visée (16) de l'endoscope (15) est réalisée en un matériau résistant aux températures élevées régnant à l'intérieur du four, en particulier un saphir.

10. Dispositif d'observation suivant la revendication 9, **caractérisée en ce que** ladite tête de visée de l'endoscope est amovible.

## Claims

1. Device for observing the charge of an electric furnace, in particular a steel arc furnace, said electric furnace comprising one or several burners positioned above the level of the molten pool, **characterised in that** at least one of said burners (8) is equipped with a camera (14) and **in that** said camera is positioned inside said burner.

2. Observation device according to Claim 1, **characterised in that** said camera is an endoscopic infrared camera.

3. Observation device according to any one of Claim 1 and 2, **characterised in that** the viewing axis (13) of said camera coincides with the longitudinal axis of the burner.

4. Observation device according to any one of Claims 1 to 3, **characterised in that** said camera is a camera for viewing infrared of a specified wavelength.

5. Observation device according to Claim 4, **characterised in that** the wavelength of said camera for viewing infrared is about 3.9µm.

6. Observation device according to any one of Claims 1 to 5, **characterised in that** the camera, and in particular its possible endoscopic head, is equipped with a cooling means.

7. Observation device according to any one of Claims 1 to 6, **characterised in that** a means for wiping the viewing window (16) with a protective gas is provided.

8. Observation device according to Claim 7, **characterised in that** said protective gas is selected from the group consisting of neutral gases such as argon or nitrogen and gaseous hydrocarbons such as methane, butane and propane.

9. Observation device according to any one of Claims 1 to 8, **characterised in that** the viewing window (16) of the endoscope (15) is made of a material resistant to the high temperatures reigning inside the furnace, in particular sapphire.

10. Observation device according to Claim 9, **characterised in that** said viewing head of the endoscope is removable.

## Patentansprüche

1. Vorrichtung zur Beobachtung des Chargiergutes eines Elektroofens, insbesondere eines Lichtbogen-Stahlofens; der besagte Elektroofen umfasst hierbei einen oder mehrere Brenner, die oberhalb des Niveaus des Schmelzbades angeordnet werden. Die Vorrichtung ist **dadurch gekennzeichnet, dass** mindestens einer der besagten Brenner (8) mit einer Kamera (14) ausgestattet ist und dass die besagte Kamera sich im Inneren des besagten Brenners befindet.

2. Vorrichtung zur Beobachtung gemäß dem Anspruch 1, **dadurch gekennzeichnet, dass** es sich bei der besagten Kamera um eine endoskopische Infrarotkamera handelt.

3. Vorrichtung zur Beobachtung gemäß eines der Ansprüche 1 und 2, **dadurch gekennzeichnet, dass** die Sichtachse (13) der besagten Kamera mit der Längsachse des Brenners übereinstimmt.

4. Vorrichtung zur Beobachtung gemäß einem der Ansprüche 1 bis 3, **dadurch gekennzeichnet, dass** es sich bei der besagten Kamera um eine Infrarotkamera mit einer festgelegten Wellenlänge handelt.

5. Vorrichtung zur Beobachtung entsprechend dem Anspruch 4, **dadurch gekennzeichnet, dass** die Wellenlänge der besagten Infrarotkamera bei ca. 3,9 µm liegt.

6. Vorrichtung zur Beobachtung gemäß einem der Ansprüche 1 bis 5, **dadurch gekennzeichnet, dass** diese Kamera, und insbesondere ihr evtl. vorhandener Endoskopkopf mit einer Kühlvorrichtung ausgestattet ist.

7. Vorrichtung zur Beobachtung gemäß einem der Ansprüche 1 bis 6, **dadurch gekennzeichnet, dass** Hilfsmittel zur Abtastung des Sichtfensters (16) mit einem Schutzgas vorgesehen sind.

8. Vorrichtung zur Beobachtung entsprechend dem Anspruch 7, **dadurch gekennzeichnet, dass** das besagte Schutzgas aus einer Gruppe gewählt wird, zu der neutrale Gase gehören, wie z.B. Argon oder Stickstoff sowie gasförmige Kohlenwasserstoffe wie Methan, Butan und Propan.

9. Vorrichtung zur Beobachtung gemäß einem der Ansprüche 1 bis 8, **dadurch gekennzeichnet, dass** das Sichtfenster (16) des Endoskops (15) aus einem Material realisiert wird, insbesondere aus Saphir, das gegenüber den erhöhten, im Inneren des Ofens vorherrschenden Temperaturen beständig ist.

10. Vorrichtung zur Beobachtung gemäß dem Anspruch 9, **dadurch gekennzeichnet, dass** der besagte Sichtkopf des Endoskops abnehmbar ist.
